# EUROPÄISCHE PATENTSCHRIFT

(11) **EP 4 148 311 B1**
(45) Veröffentlichungstag und Bekanntmachung des Hinweises auf die Patenterteilung: **10.04.2024**
(21) Anmeldenummer: 22194147.9
(22) Anmeldetag: 06.09.2022
(51) Int. Cl.: F16L 11/15, F16L 11/18, F23J 13/04, F16L 9/00, F16L 11/12, B29C 49/04, H02G 3/04, B29L 23/00

(54) **EINSTÜCKIGES KUNSTSTOFFROHR UND KUNSTSTOFFROHRSYSTEM**
ONE PIECE PLASTIC TUBE AND PLASTIC TUBE SYSTEM
TUYAU EN PLASTIQUE MONOBLOC ET SYSTÈME DE TUYAU EN PLASTIQUE

(30) Priorität: 09.09.2021 DE 102021123416; 10.01.2022 DE 102022100386
(43) Veröffentlichungstag der Anmeldung: 15.03.2023
(73) Patentinhaber: AS Technologie GmbH, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- DE-A1-102013 103 113
- DE-A1-102015 107 746
- DE-A1-102017 117 021

## Beschreibung

Die vorliegende Erfindung betrifft ein, insbesondere durch ein Thermoformverfahren, besonders bevorzugt ein Extrusionsblas- und/oder Extrusionsvakuumformverfahren hergestelltes, einstückiges Kunststoffrohr, insbesondere Kunststoff-Abgasrohr, gemäß dem Oberbegriff des Anspruchs 1 welches bevorzugt aber keinesfalls ausschließlich zum Ableiten von Abgas von einem Abgaserzeuger, insbesondere einer Gebäudeheizung, einem Blockkraftwerk oder einer Wasserstoffgewinnungsanlage dienen kann. Weiterhin betrifft die Erfindung ein Kunststoffrohrsystem nach dem Oberbegriff des Anspruchs 12.

Aus dem Stand der Technik und insbesondere auch auf den Anmelder zurückgehend existieren bereits verschiedene Ausgestaltungsformen einstückiger Kunststoffrohre, insbesondere Kunststoff-Abgasrohre. Die Anforderung oder Herausforderung ist dabei ein Kunststoffrohr, insbesondere Kunststoff-Abgasrohr, bereitzustellen, welches über wiederkehrende oder periodische Segmente oder Abschnitte ein Ablängen und Verwenden von Teilen des Kunststoffrohrs ermöglicht, gleichzeitig jedoch auch als Ganzes oder ununterbrochen verwendet werden kann und mit benachbarten Kunststoffrohren in einem Rohrsystem, bevorzugt einem Abgassystem, verbunden und am Übergang sicher abgedichtet werden kann.

Außerdem müssen die Kunststoffrohre sowohl eine notwendige Steifigkeit oder Formstabilität und gleichzeitig eine Biegbarkeit oder Verformbarkeit aufweisen, um in nicht geradlinig verlaufenden Einbauumgebungen, wie beispielsweise Abgasschächten, Schornsteinen eine Anpassung an die Einbauumgebung zu ermöglichen. Weiterhin müssen die Kunststoffrohre den jeweiligen Umwelteinflüssen ausreichend lange wiederstehen könne. Diese Umwelteinflüsse können sehr verschieden ausfallen. Bei Abgasrohren ist vor allem der Kontakt mit den Abgasen und deren Bestandteile eine besondere Herausforderung für die Langlebigkeit von Kunststoffrohren. Bei anderen Kunststoffrohren, die im Außenbereich eingesetzt werden, ist die Witterungsbeständigkeit von besonderem Interesse.

Außerdem besteht bei einer bevorzugten Verwendung der Kunststoffrohre als Kunststoff-Abgasrohre eine Anforderung an die Kunststoff-Abgasrohre darin, dass diese gute Eigenschaften im Hinblick auf die Abgasleitung und Abgasbehandlung oder Wechselwirkung mit dem Abgas aufweisen. Hierbei sind beispielsweise die Kondensationswirkung oder die Kondensationseignung der Kunststoff-Abgasrohre von Bedeutung. Auch bei anderen Fluiden, beispielsweise Aerosolen oder Gasen, können vergleichbare Anforderungen bestehen.

Aus dem Stand der Technik sind Ansätze bekannt, bei denen entlang einer Längsachse gattungsgemäßer Kunststoffrohre Glattrohrabschnitte und Wellenrohrabschnitte abwechseln. Dazu kann beispielsweise auf die DE 10 2015 107 746 A1 verwiesen werden. Bei den bekannten einstückigen Kunststoffrohren ist zudem bereits bekannt, dass in den Glattrohrabschnitten Muffenrohrabschnitte und Einführabschnitte ausgebildet werden, die es ermöglichen das gesamte Kunststoffrohr in Teile oder Teilbereiche zu zerlegen, insbesondere abzulängen, und trotzdem die Möglichkeit zu erhalten einen einfachen Anschluss oder eine einfache Verbindung zu einem anderen, benachbarten Kunststoffrohr herzustellen.

Im Stand der Technik werden die Wellenrohrabschnitte in der Regel dazu genutzt die Biegbarkeit oder Verformbarkeit des Kunststoff-Abgasrohrs zu verbessern oder zu erreichen.

Weiterhin ist aus dem Stand der Technik, insbesondere der DE 10 2017 117 021 A1 ein Ansatz bekannt, bei dem anstatt der Verwendung von Wellenrohrabschnitten Strukturabschnitte mit sich kreuzenden Gruppen von Biegenuten Verwendung finden sollte, um eine bessere, bevorzugt mehrdimensionale oder mehrachsige Verformbarkeit im Bereich der Biegeabschnitte zu erreichen, um so das Kunststoffrohr besser an komplexe Geometrien einer Einbausituation anpassen zu können. Als Verformung soll im Rahmen dieser Offenbarung nicht eine wesentliche Änderung des Querschnitts des Kunststoff-Abgasrohrs verstanden werden, sondern eine Verschwenkung oder Ausrichtung in oder um eine oder mehrere, von der ursprünglichen oder unverformten Längsachse abweichende Achsen.

Die Aufgabe der vorliegenden Erfindung besteht darin ein verbessertes Kunststoffrohr, bevorzugt Kunststoff-Abgasrohr, bereitzustellen, welches Nachteile im Stand der Technik überwindet und insbesondere die Wechselwirkungseigenschaften des Kunststoffrohrs mit darin geleiteten Fluiden, insbesondere dem Abgas verbessert.

Diese Aufgabe wird mit einem einstückigen Kunststoffrohr mit den Merkmalen des unabhängigen Anspruchs 1 gelöst. Weiterhin wird die Aufgabe durch ein Kunststoffrohrsystem, bevorzugt Kunststoff-Abgasrohrsystem oder Kunststoff-Schutzrohrsystem mit den Merkmalen des Anspruchs 12 gelöst. Vorteilhafte Ausführungsformen sind Gegenstand der nachfolgenden Beschreibung, der Figurenbeschreibung und der Figuren.

Das einstückige Kunststoffrohr zum Leiten von gasförmigen oder flüssigen Fluiden, insbesondere zum Ableiten von Abgas von einem Abgaserzeuger, besonders bevorzugt einer Gebäudeheizung, einem Blockkraftwerk oder einer Wasserstoffgewinnungsanlage, oder zum Schutz von innenliegend geführten Leitungen und Kabeln umfasst dazu eine Vielzahl von starren Glattrohrabschnitten und eine Vielzahl von entlang einer Längsachse des Kunststoff-Abgasrohrs wenigstens einseitig an die starren Glattrohrabschnitte angrenzende Strukturabschnitte, wobei die Strukturabschnitte zumindest eine erste Gruppe von Strukturnuten aufweisen. Erfindungsgemäß ist dabei vorgesehen, dass zwischen zwei Strukturabschnitten ein angeordneter, flexibler Biegeabschnitt angeordnet ist, der als Wellenrohrabschnitt ausgebildet ist.

Der vorliegenden Erfindung liegt die erstaunliche und nicht vorhersehbare Erkenntnis zugrunde, dass die in der DE 10 2017 117 021 A1 offenbarten Strukturabschnitte, die dort noch als Biegeabschnitte offenbart und beschrieben werden in der praktischen Umsetzung der Kunststoffrohre gerade nicht zu einer Erhöhung der Biegsamkeit oder Verformbarkeit der Kunststoffrohre führen, sondern gerade das Gegenteil erreichen, nämlich eine Versteifung der Kunststoffrohre.

Obwohl die Strukturabschnitte oder im Sinne der Offenbarung der DE 10 2017 117 021 A1 "Biegeabschnitte" genannten Bestandteile des dort offenbarten Kunststoffrohrs gerade nicht zur Flexibilisierung des Kunststoffrohrs beitragen, hat die Erfindung erkannt, dass diese Abschnitte, vorliegend als Strukturabschnitte bezeichnet, nicht nur die Steifigkeit des Kunststoffrohrs erhöhen, sondern auch andere, mit Ausnahme der Verformbarkeit, vorteilhafte Eigenschaften verwirklichen oder mit sich bringen.

So hat sich beispielsweise gezeigt, dass die durch die zumindest erste Gruppe von Strukturnuten gebildeten Strukturabschnitte die Oberfläche, besonders die Innenoberfläche des Kunststoffrohres in besonders vorteilhafter Weise stark erhöhen oder vergrößern. Dadurch kann in einem entsprechenden Kunststoff-Abgasrohr, verglichen mit einem gleich langen Glattrohrabschnitt und/oder Wellenrohrabschnitt eine bessere und effektivere Kondensation von Bestandteilen eines darin geleiteten Fluids, insbesondere der im Abgas gebundenen oder im Abgas enthaltenen Feuchtigkeit erreicht werden. Die verbesserte Kondensationswirkung kann in verschiedensten Einsatzgebieten der Kunststoffrohre vorteilhaft genutzt werden. Im Hinblick auf die Ableitung von Verbrennungsabgasen wird dadurch wird ein wichtiger Beitrag zur Verringerung von Treibhauseffekten der Abgase erreicht. Die vergrößere Oberfläche kann aber auch in anderer Hinsicht vorteilhaft auf die zu leitenden Fluide wirken. Beispielsweise wird eine bessere Wärmeleitung durch die vergrößerte Oberfläche erreicht, was zu einer Abkühlung oder Erwärmung der zu leitenden Fluide genutzt werden kann.

Außerdem hat sich gezeigt, dass die gerade nicht als Biegeabschnitte wirkenden Strukturabschnitte auf der Basis von wenigstens einer Gruppe von Strukturnuten durch die Verbesserung der Steifigkeit oder durch die Erhöhung der Stabilität im Bereich der Strukturabschnitte die Ausbildung der Strukturabschnitte mit vergleichsweise geringen Wandstärken erlaubt, was wiederum zu einer Materialeinsparung sowie einer Gewichtseinsparung für das Herstellungsverfahren sowie für die resultierenden Kunststoff-Abgasrohre führt, ohne dass dadurch die Langlebigkeit oder Stabilität des Kunststoff-Abgasrohres nachteilig beeinflusst wird.

Weiterhin hat sich in unerwarteter Weise herausgestellt, dass die Wellenrohrabschnitte besonders vorteilhafte Eigenschaften im Hinblick auf die thermische Ausdehnung aufweisen, sodass gerade aber keinesfalls nur bei entsprechend langen Rohren, insbesondere Abgasrohren oder Abgasleitungen, weniger Toleranz bzw. wenig Spiel oder Beweglichkeit der einzelnen Kunststoff-Abgasrohre für die thermische Ausdehnung zwischen einem erkalteten Zustand und einem Dauerbetriebszustand oder Dauerabgasführungszustand eingeplant und realisiert werden muss. So kann durch die Wellenrohrabschnitte auf einer Gesamtrohrlänge von etwa 10 Metern eine Längenausdehnung von etwa 10 cm über die Wellenrohrabschnitte erreicht werden.

Die Erfindung hat weiter erkannt, dass die aus dem Stand der Technik bekannten Wellenrohrabschnitte, die eine Flexibilisierung oder eine Verformbarkeit oder Biegsamkeit von Kunststoff-Abgasrohren ermöglichen, in vorteilhafter Weise mit den besagten Strukturabschnitten kombiniert, besonders bevorzugt zwischen den besagten Strukturabschnitten angeordnet werden können. Die Anordnung der als Wellenrohrabschnitte realisierten flexiblen Biegeabschnitte des Kunststoff-Abgasrohrs zwischen den Strukturabschnitten oder beidseitig von angrenzenden Strukturabschnitten eingekapselt hat auch den Vorteil, dass die Realisierung oder die Umsetzung einer gewünschten oder beabsichtigten Verformung oder Verbiegung des Biegeabschnitts anhand der angrenzenden, sehr steifen und wenig verformbaren oder biegbaren Strukturabschnitte erleichtert wird.

Gemäß einer ersten vorteilhaften Ausführungsform des Kunststoffrohrs kann vorgesehen sein, dass die Strukturabschnitte eine zweite Gruppe von Strukturnuten aufweist, die die Strukturnuten der ersten Gruppe kreuzen. Dadurch wird die Stabilität der Strukturabschnitte weiter verbessert.

Insgesamt soll in Bezug auf die Ausbildung, Anordnung und Ausrichtung der Strukturnuten sowie der ersten und/oder zweiten Gruppe der Strukturnuten und die daraus resultierenden Strukturabschnitte auf die Offenbarung der DE 10 2017 117 021 A1 und die dortigen Biegeabschnitte sowie Biegenuten und Gruppen von Biegenuten verwiesen werden. Denn tatsächlich hat sich in unerwarteter Weise herausgestellt, dass die dort vorteilhaft als Biegenuten offenbarten Nuten tatsächlich als Strukturnuten der Versteifung anstatt der Flexibilisierung des Kunststoffrohrs dienen. Dementsprechend wird, abgesehen von der Wirkung der dort offenbarten Biegenuten und Gruppen von Biegenuten die beschriebene Anordnung, Orientierung und Ausbildung der Biegenuten/Strukturnuten in die vorliegende Offenbarung durch Verweis miteinbezogen werden.

Gemäß einer weiteren, besonders vorteilhaften Ausführungsform kann vorgesehen sein, dass die Strukturabschnitte als starre Abschnitte ausgebildet sind. Wie oben bereits angedeutet und/oder erwähnt, kann vorgesehen sein, dass die Strukturabschnitte eine Steifigkeit aufweisen, die der der Glattrohrabschnitte wenigstens entspricht oder sogar noch größer ausfällt. Dementsprechend kann die Verformbarkeit der Strukturabschnitte gleich groß oder sogar geringer sein als die Verformbarkeit der Glattrohrabschnitte.

Eine weitere, besonders vorteilhafte Ausführungsform des Kunststoffrohrs kann vorsehen, dass die Strukturabschnitte gegenüber den Glattrohrabschnitten im Bereich der Strukturnuten und/oder zwischen den Strukturnuten eine verringerte Wandstärke aufweisen. Dadurch kann in vorteilhafter Weise Material und Gewicht eingespart werden, sowohl im Vergleich zu den angrenzen Glattrohrabschnitten als auch im Vergleich zu bekannten Kunststoff-Abgasrohren.

Gemäß einer weiteren, besonders vorteilhaften Ausführungsform kann vorgesehen sein, dass der mindestens eine Biegeabschnitt eine Vielzahl von in Längsrichtung hintereinander angeordneten bistabilen Falt- oder bistabilen Wellenelementen aufweist. Die bistabilen Falt- oder Wellenelemente können in vorteilhafter Weise eine Verformung aufnehmen und beibehalten. Dadurch können in dem Biegeabschnitt nicht nur elastische sondern zumindest teilweise oder sogar vollständig plastische Verformungen auf der Basis der bistabilen Falt- oder Wellenelemente vorgenommen werden, die dann zu einer optimierten Einbausituation, insbesondere ohne oder mit reduzierten inneren Spannungen des Kunststoffrohres führen.

In einer weiteren ebenfalls vorteilhaften Ausbildung des Kunststoff-Abgasrohrs kann vorgesehen sein, dass die Strukturabschnitte in Längsrichtung länger sind, bevorzugt zwischen 20% und 30% länger sind, als die benachbarten oder zwischen den Strukturabschnitten angeordneten Biegeabschnitte. Die relative Länge bezieht sich dabei auf einen einzelnen Strukturabschnitt. Dadurch kann in vorteilhafter Weise eine gute Verformbarkeit mit einer hohen Stabilität und einem geringen Gewicht sowie einem geringen Materialaufwand kombiniert werden. Weiter kann auch vorgesehen sein, dass die Strukturabschnitte in Längsrichtung länger sind, bevorzugt zwischen 20% und 30% länger sind, als die benachbarten Glattrohrabschnitte. Dies trifft insbesondere für innere oder innenliegende Glattrohrabschnitte zu. Für endseitige Glattrohrabschnitte kann die Länge der Strukturabschnitte 2mal bis 3mal so lang sein, wie die der Glattrohrabschnitte.

In einer weiteren, besonders vorteilhaften Ausgestaltung kann vorgesehen sein, dass der maximale Durchmesser im Wellenrohrabschnitt und/oder im Biegeabschnitt größer ist, als der maximale Durchmesser im angrenzenden Strukturabschnitt. Dadurch kann die Verformbarkeit im Biegeabschnitt verbessert und erleichtert werden.

Ebenfalls kann vorteilhaft vorgesehen sein, dass der minimale Durchmesser im Biegeabschnitt und/oder im Wellenrohrabschnitt kleiner ist, als der maximale Durchmesser im angrenzenden Strukturabschnitt. Durch den kleiner gewählten, minimalen Durchmesser im Biegeabschnitt im Vergleich zum angrenzenden Strukturabschnitt wird die Stabilität des Kunststoff-Abgasrohrs vorteilhaft beeinflusst.

In einer weiteren besonders bevorzugten Ausführungsform kann vorgesehen sein, dass die Länge des Kunststoff-Abgasrohrs in Längsrichtung maximal 5m bevorzugt 3m bis 5m, besonders bevorzugt 2,5m bis 5m beträgt. Diese Längen lassen sich einerseits besonders vorteilhaft im Thermoform-Verfahren herstellen und können gleichermaßen einfach und zuverlässig gelagert und an einen Einsatz- oder Einbauort transportiert werden.

In einer weiteren, besonders bevorzugten Ausführungsform kann vorgesehen sein, dass die abseits von den Rohrenden in Längsrichtung angeordneten Glattrohrabschnitte jeweils einen Muffenrohrabschnitt und einen Einführabschnitt aufweisen, die über einen Übergangsabschnitt miteinander verbunden sind, der von dem Einführabschnitt zum Muffenrohrabschnitt einen zunehmenden Durchmesser aufweist.

Im Stand der Technik wurden regelmäßig Anordnungen von Abschnitten gewählt, bei denen Abschnitte mit gleichem Durchmesser unmittelbar aneinander angrenzten. So sind beispielsweise aus der DE 10 2017 117 021 A1 Ausführungsformen bekannt, bei denen im Hinblick auf die Glattrohrabschnitte jeweils zwei Einführabschnitte oder alternativ zwei Muffenrohrabschnitte aneinander angrenzen.

In der vorangehend beschriebenen vorteilhaften Ausführungsform wird von dieser Anordnung der Abschnitte abgewichen und stattdessen gewollt ein Einführabschnitt benachbart zu einem Muffenrohrabschnitt angeordnet und über den besagten Übergangsabschnitt miteinander verbunden, wobei der Übergangsabschnitt die Anpassung der oder den Ausgleich der Durchmesser zwischen dem endseitigen Ende des Einführabschnitts und dem eingangsseitigen Ende des Muffenrohrabschnitts bereitstellt oder verwirklicht. Dies hat zwar zur Folge, dass beim Trennen oder Ablängen von Teilen des Kunststoff-Abgasrohrs im Bereich des Übergangsabschnitts zwei Trennungen an zwei Trennlinien oder Trennebenen vorgenommen werden müssen. Es hat sich jedoch herausgestellt, dass sowohl produktionstechnisch als auch im Hinblick auf die Strömungseigenschaften des Kunststoffrohrs die Anordnung von abwechselnd einem Einführabschnitt und einem daneben angeordneten Muffenrohrabschnitt und einer Verbindung über einen Übergangsabschnitt günstiger ist, als die angrenzende Anordnung von zwei Muffenrohrabschnitten oder Einführabschnitten in direkter Nachbarschaft zueinander.

Gemäß einer weiteren, besonders bevorzugten Variante des Kunststoffrohrs kann vorgesehen sein, dass die zwei Rohrenden in Längsrichtung Glattrohrabschnitt aufweisen. Besonders bevorzugt kann vorgesehen sein, dass auf einer Seite einen Muffenrohrabschnitt und auf der gegenüberliegenden Seite einen Einführabschnitt angeordnet ist. Damit kann sichergestellt werden, dass die Kunststoff-Abgasrohre ohne ein Ablängen von Teilen oder Bestandteilen miteinander verbunden werden können, in dem jeweils der Einführabschnitt an einem Ende eines Kunststoff-Abgasrohrs mit dem Muffenrohrabschnitt an einem anderen Ende eines anderen Kunststoff-Abgasrohrs, bevorzugt über eine Bride oder Schelle, verbunden wird.

In einer vorteilhaften Ausführungsform ist das Kunststoffrohr aus einem Polyvinylidenfluorid-Material (PVDF) gefertigt. Dies bietet sich insbesondere dann an, wenn das Kunststoffrohr als Schutzrohr im Außenbereich zum Schutz von innenliegend geführten Leitungen und/oder Rohren genutzt wird. Diese Material ist besonders UV-beständig, Ozon-beständig und schwer entflammbar. Damit eignet es sich hervorragend, um, beispielsweise auf Gebäudedächern Zu- und Ableitungen und/oder Rohre von Photovoltaikanlagen, Solarthermieanlagen oder dergleichen zu ummanteln und vor Umwelteinflüssen zu schützen. Gleichzeitig können die oben beschriebenen Vorteile bezüglich verformbaren und unverformbaren Abschnitten genutzt werden.

Die oben genannte Aufgabe wird auch durch ein Kunststoffrohrsystem gelöst, welches mindestens ein Kunststoffrohr gemäß einer der vorangehend beschriebenen Ausführungsformen aufweist, wobei angrenzend an das wenigstens eine Kunststoffrohr ein Kontrollrohr angeordnet ist, welches eine verschließbare, bevorzugt winkling, besonders bevorzugt rechtwinklig zur Längsrichtung der Kunststoffrohre angeordnete, mit einem Deckel verschließbare Kontrollöffnung umfasst.

Über die Kontrollöffnung kann beispielsweise im Fall von Abgasleitung eine Abgasmessung durchgeführt werden. Die Kontrollöffnung kann aber unabhängig vom Einsatzzweck des Kunststoffrohrsystems auch für eine optische Inspektion oder für Messzwecke genutzt werden.

Besonders bevorzugt kann das Kontrollrohr zwischen zwei Kunststoffrohren angeordnet sein.

Die Erfindung wird nachfolgend anhand von rein schematischen, beispielhaften Zeichnungen erläutert, die Ausführungsformen der Erfindung zeigen.

Darin zeigt:
- Fig. 1:: ein erfindungsgemäßes einstückiges Kunststoffrohr in einer Seitenansicht;
- Fig. 2:: eine vergrößerte Detaildarstellung des in der Fig. 1 gekennzeichneten Bereichs X;
- Fig. 3:: eine vergrößerte Detaildarstellung des Bereichs Y der Fig. 1;
- Fig. 4:: eine vergrößerte Detaildarstellung des Bereichs W der Fig. 1;
- Fig. 5:: eine vergrößerte Detaildarstellung des Bereichs Z der Fig. 1;
- Fig. 6a bis Fig. 6c:: Ausschnitt eines erfindungsgemäßen Kunststoffrohrs in einer perspektivischen Ansicht, einer Seitenansicht und einer Ansicht in Längsrichtung;
- Fig. 7:: Ausschnitt aus einer ersten Ausführungsform eines erfindungsgemäßen Kunststoffrohrsystems umfassend Kunststoffrohre und ein Kontrollrohr;
- Fig. 8: Ausschnitt aus einer zweiten Ausführungsform eines erfindungsgemäßen Kunststoffrohrsystems umfassend ein Kunststoffrohr und ein Kontrollrohr.

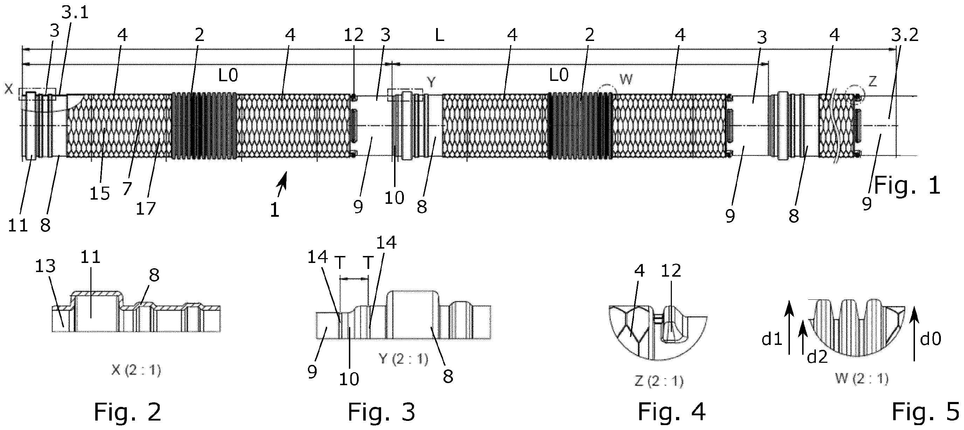

Die Fig. 1 zeigt ein erfindungsgemäßes Kunststoffrohr 1, bevorzugt Kunststoff-Abgasrohr, zum Ableiten von Abgas, insbesondere von Gebäudeheizungen, umfassend eine Vielzahl von starren Glattrohrabschnitten 3 und eine Vielzahl von entlang einer Längsachse L des Kunststoffrohrs 1 wenigstens einseitig an die starren Glattrohrabschnitte 3 angrenzende Strukturabschnitte 4, wobei die Strukturabschnitte 4 eine erste Gruppe von Strukturnuten 7 aufweisen und wobei zwischen den Strukturabschnitten 4 ein flexibler Biegeabschnitt 2 angeordnet ist, der als Wellenrohrabschnitt ausgebildet ist.

Die endseitigen Glattrohrabschnitte 3.1 und 3.2 werden von je einem Muffenrohrabschnitt 8 und einem gegenüberliegend angeordneten Einführabschnitt 9 gebildet. Die innenliegenden oder zwischen den Enden angeordneten Glattrohrabschnitte 3 werden von einer Kombination aus einem Muffenrohrabschnitt 8 und einem Einführabschnitt 9 gebildet, in deren Zwischenbereich ein Übergangsabschnitt 10 angeordnet ist. Im Beispiel der Fig. 1 wird der Strukturabschnitt 4 auch durch eine erste Gruppe und eine zweite Gruppe von Strukturnuten 17 gebildet, die die Strukturnuten 7 der ersten Gruppe von Strukturnuten kreuzen und somit eine Vielzahl von, bevorzugt mehreckigen, ganz besonders bevorzugt rautenförmig, konturierten Erhebungsabschnitten 15 begrenzen. Bezüglich der Strukturabschnitte 4 wird auf die Patentanmeldung DE 10 2017 117 021 A1 und die dortige Offenbarung im Hinblick auf die Biegeabschnitte und Biegenuten verwiesen. Diese Offenbarung soll als Strukturabschnitte und Strukturnuten in die vorliegende Offenbarung miteinbezogen werden. Dies bedeutet, dass die vorliegenden Strukturabschnitte 4 gemäß der Offenbarung der Biegeabschnitte der vorgenannten Patentanmeldung ausgestaltet sein können. Zwischen zwei Strukturabschnitten 4 ist jeweils ein Biegeabschnitt 2 angeordnet. Der Biegeabschnitt 2 ist als Wellenrohrabschnitt ausgebildet.

Die als Muffenrohrabschnitte 8 ausgebildeten Glattrohrabschnitte 3, 3.1 können Aufnahmevertiefungen 11 zur Aufnahme von Dichtmitteln aufweisen. Die Dichtmittel werden bevorzugt in endseitigen Muffenrohrabschnitten 8 angeordnet, wobei die Muffenrohrabschnitte 8 entweder durch den Produktionsprozess oder durch Ablängen eines Kunststoff-Abgasrohrs 1 gebildet werden können oder entstehen können. Die Einführabschnitte 9 weisen bevorzugt Bajonettmittel 12 auf, mit denen eine Verbindung mit einem nicht einstückig verbundenen Muffenrohrabschnitt 8 eines benachbarten Kunststoffrohres 1 hergestellt werden kann, wobei die Bajonettmittel 12 bevorzugt mit einem Verbindungsring oder Sicherungsring oder einer Bride zusammenwirken, die mit oder an dem Muffenrohrabschnitt 8 eines benachbarten Abgasrohres 1 festgelegt sind oder verbunden sind.

In der Fig. 1 ist erkennbar, dass die Strukturabschnitte 4 in Längsrichtung L eine größere Länge oder Erstreckung aufweisen als die Biegeabschnitte 2. Weiterhin vorteilhaft kann vorgesehen sein, dass die Strukturabschnitte 4 auch eine größere Länge in Längsrichtung L oder größere Erstreckungen in Längsrichtung L aufweisen, als die Glattrohrabschnitte 3 insbesondere auch eine größere Erstreckung aufweisen als die nicht endseitig angeordneten Glattrohrabschnitte 3.1 und 3.2. Das dargestellte, einstückige Kunststoff-Abgasrohr soll bevorzugt maximal 5m lang oder eine maximale Länge in Längsrichtung L von 5m aufweisen. Eine ablängbare Einheit umfassend ein Muffenrohrabschnitt 8, zwei Strukturabschnitte 4 mit einem dazwischen angeordneten Biegeabschnitt 2 und einem Einführabschnitt 9 ohne den Übergangsabschnitt 10 weist bevorzugt eine Länge L0 von 45 bis 55 cm auf.

Die Fig. 2 zeigt einen Ausschnitt des endseitigen Glattrohrabschnitts 3.1, der als Muffenrohrabschnitt 8 ausgebildet ist. Darin deutlich zu erkennen sind die Aufnahmevertiefung 11 zur Aufnahme einer Dichtung, bevorzugt einer Lippendichtung. Der endseitige, vom angrenzenden Strukturabschnitt 4 abgewandte Durchmesser des Muffenrohrabschnitts 8 ist so gewählt, dass ein als Einführabschnitt 9 ausgebildeter Glattrohrabschnitt 3 in die Öffnung 13 des Muffenrohrabschnitts 8 eingeführt und, wie bereits angedeutet mittels Verbindung über einen Sicherungsring, Befestigungsring oder Bride verbunden werden kann.

In der Darstellung der Fig. 3 ist insbesondere der Übergangsabschnitt 10 zwischen einem Muffenrohrabschnitt 8 und einem Einführabschnitt 9 deutlicher dargestellt. Anders als im Stand der Technik wird in der vorteilhaften Ausführungsform der Fig. 1 und Fig. 3 eine Herstellung des Kunststoff-Abgasrohrs 1 und eine entsprechende Anordnung der Abschnitte gewählt, bei der nicht Muffenrohrabschnitt 8 an Muffenrohrabschnitt 8 angrenzt und umgekehrt Einführabschnitt 9 an Einführabschnitt 9 angrenzt, sondern bei denen abseits der Enden des Kunststoffrohrs 1 ein Muffenrohrabschnitt 8 an einen Einführabschnitt 9 angrenzt, wobei die unterschiedlichen Durchmesser über den dazwischenliegend angeordneten Übergangsabschnitt 10 ausgeglichen werden.

An beiden Enden 14 in Längsrichtung L weist der Übergangsabschnitt 10 Trennlinien T oder Trennebenen auf, um einen Teil des Kunststoffrohres 1 abzulängen. Dabei müssen in der Regel zwei Trennvorgänge an den Trennlinien T durchgeführt werden, um den jeweils abgelängten Teil benutzen zu können oder um den Übergangsabschnitt zu entfernen. Trotzdem hat sich diese alternierende Anordnung von Abschnitten gegenüber der "gespiegelten" Anordnung von Abschnitten als vorteilhaft herausgestellt.

In der Fig. 4 ist der Übergang zwischen einem Biegeabschnitt 2 und einem Strukturabschnitt 4 vergrößert dargestellt. Dabei ist erkennbar, dass der maximale Durchmesser d1 des als Wellenrohrabschnitts ausgebildeten Biegeabschnitt 2 größer ausfällt als der maximale Durchmesser d0 des Strukturabschnitts 4. Gleichermaßen ist erkennbar, dass der minimale Durchmesser d2 des Biegeabschnitts 2 geringer ausfällt als der maximale Durchmesser d0 des Strukturabschnitts 4.

In der Fig. 5 ist der Übergang zwischen einem Strukturabschnitt 4 und einem als Glattrohrabschnitt 3 ausgebildeten Einführabschnitt 9 dargestellt. In der vergrößerten Darstellung ist erkennbar, dass die Bajonettmittel 12 in unmittelbarer Nachbarschaft zum Übergang des Strukturabschnitts 4 angeordnet sind. Hieraus wird erkennbar, dass bei einem Zusammenfügen von zwei Kunststoffrohren 1 die wesentliche Stabilität im Übergangsbereich durch die im Übergangsbereich angeordneten Strukturabschnitte 4 gewährleistet wird.

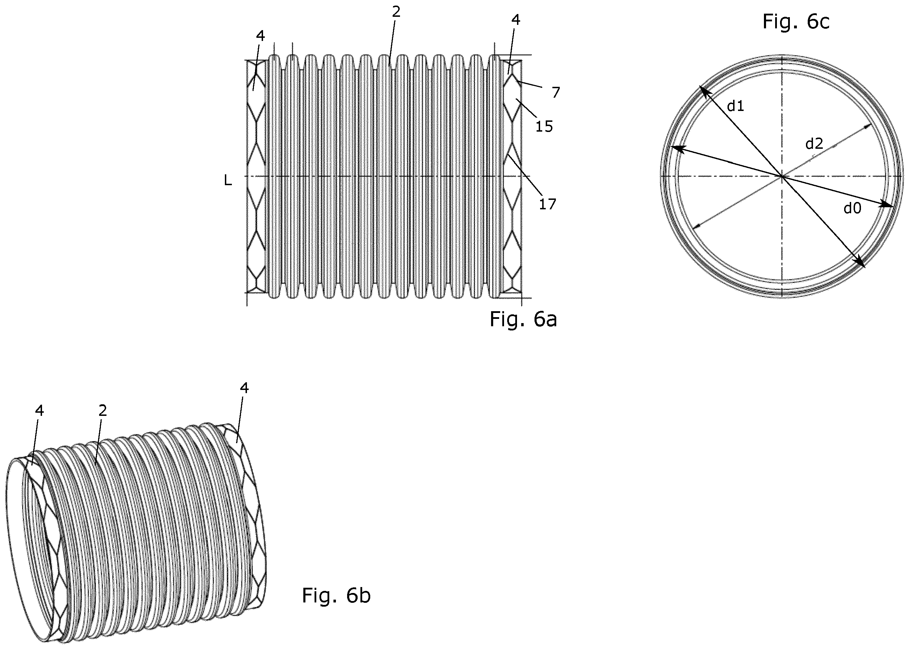

Die Fig. 6a zeigt einen Ausschnitt aus einem erfindungsgemäßen Kunststoffrohr 1 im Bereich eines Biegeabschnitts 2 mit zwei beidseitig in Längsrichtung L angrenzenden Strukturabschnitten 4. In der Detaildarstellung der Fig. 6a ist nochmals zu erkennen, dass die Strukturnuten 7, 9 rautenförmig konturierte Erhebungsabschnitte 15 begrenzen. Weiterhin ist gut erkennbar, dass die Biegeabschnitte 2 als Wellenrohrabschnitte mit bevorzugt mehr als acht Wellen, bevorzugt zwischen neun und fünfzehn, besonders bevorzugt zwischen zehn und dreizehn Wellen ausgebildet sind.

In der Perspektivdarstellung der Fig. 6b ist ebenfalls nochmals der Biegeabschnitt 2 mit den beidseitig angrenzenden Strukturabschnitten 4 dargestellt.

Die Darstellung der Fig. 6c zeigt eine Sicht in Längsrichtung L des Ausschnitts der Fig. 6a und 6b. Darin ist nochmals zu erkennen, dass der minimale Durchmesser d2 des Biegeabschnitts 2 geringer ausfällt als der maximale Durchmesser d0 der Strukturabschnitte 4. Der maximale Durchmesser d0 der Strukturabschnitte 4 ist wiederum kleiner als der maximale Durchmesser d1 des Biegeabschnitts 2.

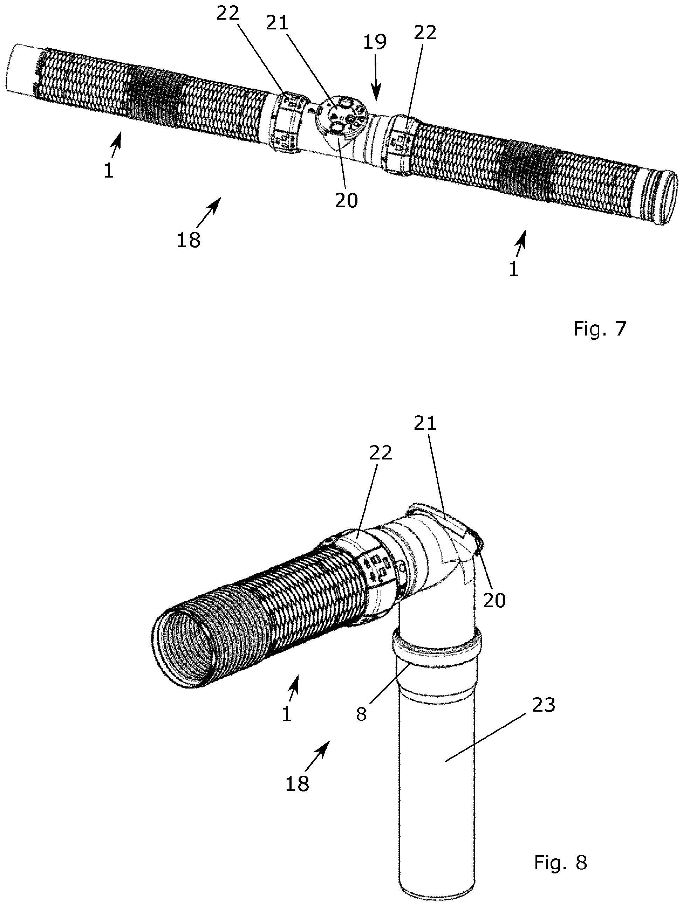

Fig. 7 zeigt ein Kunststoffrohrsystem 18, welches bevorzugt aber keinesfalls ausschließlich zum Ableiten von Abgasen einer Verbrennung verendet werden kann. Das Kunststoffrohrsystem 18 umfasst zwei Kunststoffrohre 1 gemäß einer der vorangehend beschriebenen Ausführungsformen. Zwischen zwei benachbarten Kunststoffrohren 1 ist ein Kontrollrohr 19 angeordnet. In der Ausführungsform der Fig. 7 ist das Kontrollrohr 19 im Wesentlichen grade ausgebildet und erstreckt sich mit einer Längsrichtung des Kontrollrohrs parallel und konzentrisch zu den Längsrichtungen L der Kunststoffrohre 1. Etwa auf halber Höhe entlang der Längsrichtung L weist das Kontrollrohr 19 eine Kontrollöffnung 20 auf.

Die Kontrollöffnung 20 ist in der Darstellung der Fig. 7 mit einem Deckel 21 verschlossen. Der Deckel 21 kann, bevorzugt über eine Drehbewegung von der Kontrollöffnung gelöst werden, um einen Zugang zum Inneren des Kontrollrohrs 19 und damit zum Inneren des Kunststoffrohrsystems 18 zu ermöglichen. Das Kontrollrohr kann an beiden Enden in Längsrichtung je einen Muffenrohrabschnitt und einen Einführabschnitt aufweisen, die im zusammengefügten Zustand des Kunststoffrohrsystems 18 nicht erkennbar sind, aber im Wesentlichen gleich zu den Muffenrohrabschnitten und Einführabschnitten der Kunststoffrohre ausgebildet sein können. Die Befestigung des Kontrollrohrs 19 gegenüber den Kunststoffrohren 1 kann über Briden 22 erfolgen. Das Kontrollrohr 19 kann bevorzugt, insbesondere einschließlich dem Deckel 21, ebenfalls aus Kunststoff gefertigt sein.

Die Fig. 8 zeigt eine alternative Ausführungsform eines erfindungsgemä-ßen Kunststoffrohrsystems. Im Unterschied zur Ausführungsform der Fig. 7 ist das Kontrollrohr gewinkelt ausgebildet. Bevorzugt beträgt der Winkel 87°. Außerdem ist einseitig an dem Kontrollrohr ein Glattrohr 23 angeordnet und mit dem Kontrollrohr 19 verbunden, wobei das Glattrohr 23 in einem Muffenrohrabschnitt 8 einen Einführabschnitt des Kontrollrohrs 19 aufnimmt. An einem gegenüberliegenden Ende des gewinkelten Kontrollrohrs 19 ist ein Kunststoffrohr 1 gemäß der vorliegenden Erfindung angeordnet und über eine Bride 22 mit dem Kontrollrohr 19 verbunden.

### Bezugszeichen

- 1: Kunststoffrohr
- 2: Biegeabschnitte
- 3: Glattrohrabschnitte
- 3.1, 3.2: Glattrohrabschnitte
- 4: Strukturabschnitte
- 6: erste Gruppe
- 7: Strukturnuten
- 8: Muffenrohrabschnitt
- 9: Einführabschnitte
- 10: Übergangsabschnitt
- 11: Aufnahmevertiefungen / Aufnahmemittel
- 12: Bajonettmittel
- 13: Öffnung
- 14: Enden
- 15: Erhebungsabschnitte
- 17: Strukturnuten
- 18: Kunststoffrohrsystem
- 19: Kontrollrohr
- 20: Kontrollöffnung
- 21: Deckel
- 22: Bride
- 23: Glattrohr

- d0: maximale Durchmesser
- d1: maximale Durchmesser
- d2: minimale Durchmesser
- L: Längsachse / Längsrichtung
- T: Trennlinie

## Patentansprüche

1. Einstückiges Kunststoffrohr (1) zum Leiten von gasförmigen oder flüssigen Fluiden, bevorzugt Kunststoff-Abgasrohr zum Ableiten von Abgas, insbesondere von Gebäudeheizungen, oder zum Schutz von innenliegend geführten Leitungen und Kabeln umfassend eine Vielzahl von starren Glattrohrabschnitten (3) und eine Vielzahl von entlang einer Längsachse (L) des Kunststoffrohres (1) wenigstens einseitig an die starren Glattrohrabschnitte (3) angrenzende Strukturabschnitte (4), wobei die Strukturabschnitte (4) eine erste Gruppe (6) von Strukturnuten (7) aufweisen,
**gekennzeichnet durch**
mindestens einen, zwischen zwei der Strukturabschnitten (4) angeordneter, flexiblen Biegeabschnitt (2), der als Wellenrohrabschnitt ausgebildet ist

2. Kunststoffrohr nach Anspruch 1,
**dadurch gekennzeichnet,**
**dass** die Strukturabschnitte (4) eine zweite Gruppe von Strukturnuten (9) aufweisen, die die Strukturnuten (7) der ersten Gruppe (6) kreuzen.

3. Kunststoffrohr nach Anspruch 1 oder 2,
**dadurch gekennzeichnet,**
**dass** die Strukturabschnitte (4) als starre Abschnitte ausgebildet sind.

4. Kunststoffrohr nach einem der Ansprüche 1 bis 3,
**dadurch gekennzeichnet,**
**dass** die Strukturabschnitte (4) gegenüber den Glattrohrabschnitten (3. 3.1, 3.2) im Bereich der Strukturnuten (7, 9) und/oder zwischen den Strukturnuten (7, 9) eine verringerte Wandstärke aufweisen.

5. Kunststoffrohr nach einem der Ansprüche 1 bis 4,
**dadurch gekennzeichnet,**
**dass** der mindestens eine Biegeabschnitt (2) eine Vielzahl von in Längsrichtung (L) hintereinander angeordneten bistabilen Falt- oder bistabilen Wellenelementen aufweist.

6. Kunststoffrohr nach einem der Ansprüche 1 bis 5,
**dadurch gekennzeichnet,**
**dass** die Strukturabschnitte (4) in Längsrichtung (L) länger sind, bevorzugt zwischen 20% und 30% länger sind, als die benachbarten Biegeabschnitte (2).

7. Kunststoffrohr nach einem der Ansprüche 1 bis 6,
**dadurch gekennzeichnet,**
**dass** der maximale Durchmesser (d1) im Wellenrohrabschnitt größer ist, als der maximale Durchmesser (d0) im angrenzenden Strukturabschnitt (4).

8. Kunststoffrohr nach einem der Ansprüche 1 bis 7,
**dadurch gekennzeichnet,**
**dass** der minimale Durchmesser (d2) im Wellenrohrabschnitt kleiner ist, als der maximale Durchmesser (d0) im angrenzenden Strukturabschnitt (4).

9. Kunststoffrohr nach einem der Ansprüche 1 bis 8,
**dadurch gekennzeichnet,**
**dass** die Länge in Längsrichtung (L) maximal 5m beträgt.

10. Kunststoffrohr nach einem der Ansprüche 1 bis 9,
**dadurch gekennzeichnet,**
**dass** die abseits von den Rohrenden in Längsrichtung (L) angeordneten Glattrohrabschnitte (3, 3.1, 3.2) einen Muffenrohrabschnitt (8) und einen Einführabschnitt (9) aufweisen, die über einen Übergangsabschnitt (10) miteinander verbunden sind, der von dem Einführabschnitt (9) zum Muffenrohrabschnitt (8) einen zunehmenden Durchmesser aufweist.

11. Kunststoffrohr nach einem der Ansprüche 1 bis 10,
**dadurch gekennzeichnet,**
**dass** die zwei Rohrenden in Längsrichtung (L) auf einer Seite einen Muffenrohrabschnitt (8) und auf der gegenüberliegenden Seite einen Einführabschnitt (9) aufweisen.

12. Kunststoffrohrsystem, insbesondere Kunststoff-Abgasrohrsystem oder Kunststoff-Schutzrohrsystem, umfassend wenigstens ein Kunststoffroh (1), insbesondere Kunststoff-Abgasrohre, nach einem der Ansprüche 1 bis 11,
**dadurch gekennzeichnet,**
**dass** angrenzend an das wenigstens eine Kunststoffrohr (1) ein Kontrollrohr (19) angeordnet ist, welches eine verschließbare, bevorzugt winkling, besonders bevorzugt rechtwinklig zur Längsrichtung (L) der Kunststoffrohre angeordnete, mit einem Deckel (21) verschließbare Kontrollöffnung (20) umfasst.

13. Kunststoffrohrsystem nach Anspruch 12,
**dadurch gekennzeichnet,**
**dass** das Kontrollrohr (19) zwischen zwei Kunststoffrohren (1) angeordnet ist.

## Claims

1. An integral plastic pipe (1) for guiding gaseous or liquid fluids, preferably a plastic exhaust pipe for discharging exhaust gas, in particular from building heating systems, or for protecting internally guided lines and cables, said plastic pipe (1) comprising a plurality of rigid plain pipe sections (3) and a plurality of structure sections (4) adjoining the rigid plain pipe sections (3) at least on one side along a longitudinal axis (L) of the plastic pipe (1), the structure sections (4) having a first group (6) of structure grooves (7),
**characterized by**
at least one flexible bending section (2) disposed between two of the structure sections (4) and realized as a corrugated pipe section.

2. The plastic pipe according to claim 1,
**characterized in that**
the structure sections (4) have a second group of structure grooves (9) crossing the structure grooves (7) of the first group (6).

3. The plastic pipe according to claim 1 or 2,
**characterized in that**
the structure sections (4) are realized as rigid sections.

4. The plastic pipe according to any one of claims 1 to 3,
**characterized in that**
the structure sections (4) have a reduced wall thickness in the area of the structure grooves (7, 9) and/or between the structure grooves (7, 9) compared with the plain pipe sections (3. 3.1, 3.2).

5. The plastic pipe according to any one of claims 1 to 4,
**characterized in that**
the at least one bending section (2) has a plurality of bistable folding elements or bistable corrugated elements which are disposed one behind the other in the longitudinal direction (L).

6. The plastic pipe according to any one of claims 1 to 5,
**characterized in that**
the structure sections (4) are longer in the longitudinal direction (L) than the adjacent bending sections (2), preferably between 20 % and 30 % longer.

7. The plastic pipe according to any one of claims 1 to 6,
**characterized in that**
the maximum diameter (d1) in the corrugated pipe section is larger than the maximum diameter (d0) in the adjoining structure section (4).

8. The plastic pipe according to any one of claims 1 to 7,
**characterized in that**
the minimum diameter (D2) in the corrugated pipe section is smaller than the maximum diameter (d0) in the adjoining structure section (4).

9. The plastic pipe according to any one of claims 1 to 8,
**characterized in that**
the length in the longitudinal direction (L) is maximally 5 m.

10. The plastic pipe according to any one of claims 1 to 9,
**characterized in that**
the plain pipe sections (3, 3.1, 3.2) disposed away from the pipe ends in the longitudinal direction (L) have a socket pipe section (8) and an insertion section (9) which are connected to each other via a transition section (10) having an increasing diameter from the insertion section (9) to the socket pipe section (8).

11. The plastic pipe according to any one of claims 1 to 10,
**characterized in that**
the two pipe ends have on one side a socket pipe section (8) and on the opposite side an insertion section (9) in the longitudinal direction (L).

12. A plastic pipe system, in particular a plastic exhaust pipe system or a plastic protective pipe system, comprising at least one plastic pipe (1), in particular plastic exhaust pipes, according to one of the claims 1 to 11,
**characterized in that**
an inspection pipe (19) is disposed so as to adjoin the at least one plastic pipe (1), said inspection pipe (19) comprising an inspection opening 20 which is closeable, which is disposed preferably at an angle, especially preferably at right angles, with respect to the longitudinal direction (L) of the plastic pipes and which is closeable with a cover (21).

13. The plastic pipe system according to claim 12,
**characterized in that**
the inspection pipe (19) is disposed between two plastic pipes (1).

## Revendications

1. Tuyau en plastique (1) d'un seul tenant pour diriger des fluides gazeux ou liquides, de préférence un tuyau d'échappement en plastique pour évacuer des gaz d'échappement, notamment de chauffages d'un bâtiment, ou pour protéger des conduites et des câbles guidés à l'intérieur, ledit tuyau en plastique (1) comprenant une pluralité de parties (3) de tuyau lisse rigides et une pluralité de parties (4) de structure attenantes aux parties (3) de tuyau lisse rigides au moins d'un côté le long d'un axe longitudinal (L) du tuyau en plastique (1), les parties de structure (4) ayant un premier groupe (6) de rainures de structure (7),
**caractérisé par**
au moins une partie de flexion (2) flexible disposée entre deux des parties de structure (4) et réalisée comme partie de tuyau ondulé.

2. Tuyau en plastique selon la revendication 1,
**caractérisé en ce que**
les parties de structure (4) ont un deuxième groupe de rainures de structure (9) croisant les rainures de structure (7) du premier groupe (6).

3. Tuyau en plastique selon la revendication 1 ou 2,
**caractérisé en ce que**
les parties de structure (4) sont réalisées comme parties rigides.

4. Tuyau en plastique selon l'une quelconque des revendications 1 à 3, **caractérisé en ce que**
les parties de structure (4) ont une épaisseur de paroi réduite dans la zone des rainures de structure (7, 9) et/ou entre les rainures de structure (7, 9) par rapport aux parties (3. 3.1, 3.2) de tuyau lisse.

5. Tuyau en plastique selon l'une quelconque des revendications 1 à 4, **caractérisé en ce que**
l'au moins une partie de flexion (2) flexible a une pluralité d'éléments de pliage bistables ou d'éléments ondulés bistables disposés les uns derrière les autres dans la direction longitudinale (L).

6. Tuyau en plastique selon l'une quelconque des revendications 1 à 5, **caractérisé en ce que**
les parties de structure (4) sont plus longues dans la direction longitudinale (L) que les parties de flexion (2) adjacentes, de préférence entre 20 % et 30 % plus longues.

7. Tuyau en plastique selon l'une quelconque des revendications 1 à 6, **caractérisé en ce que**
le diamètre maximal (d1) dans la partie de tuyau ondulé est supérieur au diamètre maximal (d0) dans la partie de structure (4) attenante.

8. Tuyau en plastique selon l'une quelconque des revendications 1 à 7, **caractérisé en ce que**
le diamètre minimal (d2) dans la partie de tuyau ondulé est inférieur au diamètre maximal (d0) dans la partie de structure (4) attenante.

9. Tuyau en plastique selon l'une quelconque des revendications 1 à 8, **caractérisé en ce que**
la longueur dans la direction longitudinale (L) est au maximum de 5 m.

10. Tuyau en plastique selon l'une quelconque des revendications 1 à 9, **caractérisé en ce que**
les parties (3, 3.1, 3.2) de tuyau lisse disposées loin des extrémités du tuyau dans la direction longitudinale (L) ont une partie (8) de tuyau à emboîtement et une partie d'insertion (9) qui sont reliées l'une à l'autre via une partie de transition (10) qui a un diamètre croissant à partir de la partie d'insertion (9) vers la partie (8) de tuyau à emboîtement.

11. Tuyau en plastique selon l'une quelconque des revendications 1 à 10, **caractérisé en ce que**
les deux extrémités du tuyau ont d'un côté une partie (8) de tuyau à emboîtement et du côté opposé une partie d'insertion (9) dans la direction longitudinale (L).

12. Système de tuyaux en plastique, notamment un système de tuyaux d'échappement en plastique ou un système de tuyaux de protection en plastique, comprenant au moins un tuyau en plastique (1), notamment des tuyaux d'échappement en plastique, selon l'une quelconque des revendications 1 à 11,
**caractérisé en ce**
**qu'**un tuyau d'inspection (19) est disposé de manière attenante à l'au moins un tuyau en plastique (1), ledit tuyau d'inspection (19) comprenant une ouverture d'inspection (20) qui est capable d'être fermée, qui est disposée, de préférence, angulairement, de préférence particulière perpendiculairement, par rapport à la direction longitudinale (L) des tuyaux en plastique et qui est capable d'être fermée avec un couvercle (21).

13. Système de tuyaux en plastique selon la revendication 12,
**caractérisé en ce que**
le tuyau d'inspection (19) est disposé entre deux tuyaux en plastique (1).
